Europäisches Patentamt

European Patent Office

Office européen des brevets

(11) Numéro de publication: **0 367 686**
**A1**

# DEMANDE DE BREVET EUROPEEN

(21) Numéro de dépôt: 89420396.7

(22) Date de dépôt: 17.10.89

(51) Int. Cl.⁵ **G11B 5/70 , G11B 5/80**

(30) Priorité: 18.10.88 FR 8814218

(43) Date de publication de la demande:
**09.05.90 Bulletin 90/19**

(84) Etats contractants désignés:
**ES**

(71) Demandeur: **KODAK-PATHE**
**26, rue Villiot**
**F-75594 Paris Cedex 12(FR)**

(72) Inventeur: **Pingaud, Bernard**
**KODAK PATHE Zone Industrielle**
**F-71102 Chalon sur Saone CEDEX(FR)**
Inventeur: Laine, Antoine, Marie, Bernard
**KODAK PATHE Zone Industrielle**
**F-71102 Chalon sur Saone CEDEX(FR)**

(74) Mandataire: **Buff, Michel**
**Kodak-Pathé Département des Brevets et**
**Licences CRT Centre de Recherches et de**
**Technologie Zone Industrielle**
**F-71102 Chalon sur Saône Cédex(FR)**

(54) **Carte magnétique à haute densité dont l'une des faces est susceptible de recevoir une image thermographique.**

㊶ L'invention concerne une carte mémoire à haute densité d'informations.

La carte mémoire comprend un support susceptible de recevoir, sur au moins une partie de l'une de ses faces, une image réalisée par transfert thermique, l'autre face étant recouverte, sur au moins une partie de sa surface, d'un milieu d'enregistrement magnétique à haute densité.

Application aux dossiers portables et aux contrôles d'accès.

Fig. 1

EP 0 367 686 A1

# CARTE MAGNETIQUE A HAUTE DENSITE DONT L'UNE DES FACES EST SUSCEPTIBLE DE RECEVOIR UNE IMAGE THERMOGRAPHIQUE

L'invention concerne une carte mémoire à haute densité comportant, sur la majeure partie de l'une de ses faces, une couche magnétique et sur l'autre face des informations visuelles permettant par exemple d'identifier le titulaire de la carte.

Dans la technique antérieure, il existe déjà des cartes magnétiques du type cartes-bancaires comprenant quelques pistes magnétiques sur une de ses faces et, sur l'autre face, une illustration renseignant sur le titulaire de la carte, ou comportant, par exemple, le logo de la banque délivrant la carte. Dans ces cartes, l'impression est réalisée par des techniques classiques d'impression telles que l'OFFSET, la sérigraphie, etc.

De même, il existe déjà des cartes magnétiques pour lesquelles l'illustration est réalisée à partir d'une feuille sur laquelle on réalise une image par transfert thermique, que l'on colle ensuite sur la carte, dans une étape du procédé de réalisation de la carte.

L'inconvénient de tels systèmes réside principalement dans le fait que le contenu de ladite illustration doit absolument être déterminé au moment de la fabrication de la carte. Il en résulte que les informations sont absolument figées pendant la durée de vie de la carte.

Or, dans le cas où l'on utilise une telle carte magnétique pour stocker des informations relatives, par exemple, au dossier médical d'un individu, il est nécessaire que les informations contenues sur le milieu magnétique ainsi que sur la face illustrée (qui peut reprendre, dans le cas d'une carte magnétique à haute densité, des informations contenues dans la couche magnétique) puissent être mises à jour et complétées. Cela implique donc qu'il soit possible d'y inscrire de nouvelles informations en dehors du processus de fabrication de la carte.

Aussi, est-ce un des objets de la présente invention que de fournir une carte magnétique haute densité comportant sur l'une de ses faces des informations visuelles qui peuvent être mises à jour et complétées en dehors du processus de fabrication de la carte.

D'autres objets de la présente invention apparaîtront au cours de la description qui va suivre.

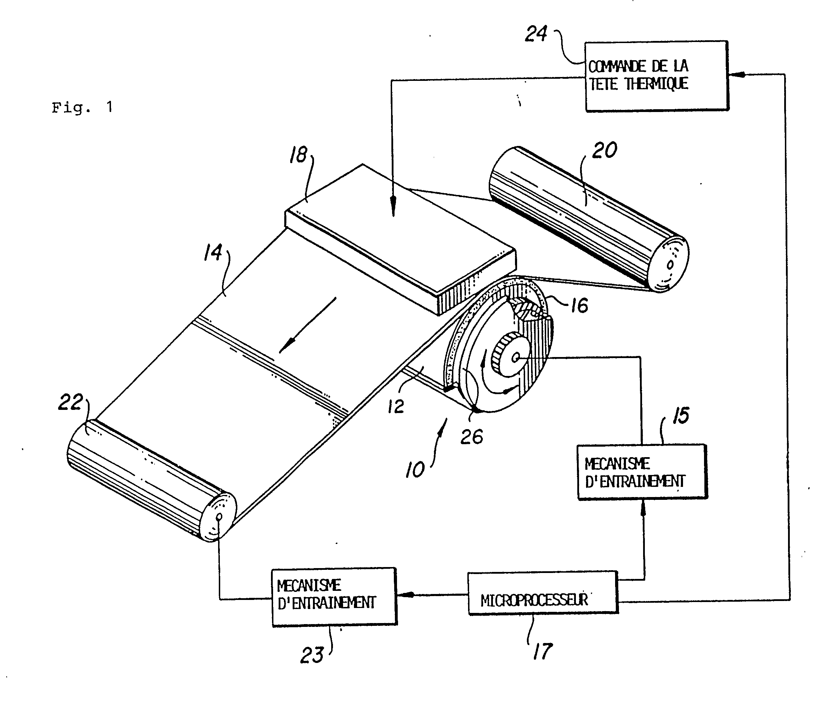

La description qui va suivre sera faite en faisant référence à la figure unique qui représente de manière schématique un dispositif de thermographie qui peut être utilisé pour la réalisation de la carte selon la présente invention.

L'invention a donc pour objet une carte mémoire comprenant un support susceptible de recevoir, sur au moins une partie d'au moins une de ses faces, une image réalisée par transfert thermique, l'autre face étant recouverte, sur au moins une partie de sa surface, d'une couche magnétique comprenant un milieu d'enregistrement magnétique dont le champ coercitif est supérieur à 4000 Oe et dont la densité d'information est d'au moins 5 kbits/cm$^2$.

La carte selon la présente invention est constituée d'un support semi-rigide et stable en dimension portant sur une de ses faces un milieu d'enregistrement magnétique formé de particules magnétiques ayant un champ coercitif supérieur à 4000 Oe et de préférence supérieur à 5000 Oe. La densité d'information, sur cette surface d'enregistrement est supérieure à 5 kbits/cm$^2$ et de préférence supérieure à 50 kbits/cm$^2$. De plus, cette surface d'enregistrement magnétique contient au moins 10 pistes cm et de préférence 40 pistes cm. On peut ainsi obtenir, pour une carte ayant les dimensions normalisées 54 x 86 mm, une capacité totale supérieure à 1 Mbit. L'autre face est destinée à recevoir une impression thermographique. Il peut s'agir d'informations diverses telles que la photographie du titulaire, un logo, une signature, etc.

Nous allons maintenant décrire un exemple de carte selon la présente invention ainsi qu'un exemple de procédé de fabrication de la carte selon la présente invention.

En ce qui concerne la couche magnétique de ladite carte, les particules magnétiques utilisées sont des particules d'hexaferrite de Ba ou de Sr ayant un champ coercitif élevé, supérieur à 4000 Oe et de préférence, supérieur à 5000 Oe. Un tel champ coercitif élevé assure la sécurité des informations enregistrées qui sont ineffaçables par des champs externes courants, tout en conservant une capacité de réinscription par écrasement.

Des particules d'hexaferrite de baryum ou de strontium sont connues depuis longtemps. On peut en particulier les obtenir par coprécipitation en solution alcaline d'un sel ferrique et d'un sel de Ba ou Sr, puis calcination à haute température du coprécipité obtenu. C.D. Mee et J.C.Jeschke " Single-Domaine Properties in Hexagonal ferrites " J. of Applied Physics, Vol. 34, n° 4, 1271-2, 1963, décrivent la préparation de telles particules. Ce procédé ancien présente cependant l'inconvénient d'aboutir à des particules grossières, de taille non homogène, et difficilement dispersables, ayant tendance à former des agglomérats. Ces inconvénients rendent les particules inaptes à la préparation de couches d'enregistrement magnétiques. De nombreux procédés ont été proposés récemment pour remédier à ces inconvénients, tels que la synthèse hydrothermale, ou des procédés améliorés de coprécipitation.

Un procédé de préparation d'hexaferrites préféré est celui qui fait l'objet de la demande de brevet FR 88 14221, intitulée "Procédé de préparation de particules magnétiques d'hexaferrite, particules obtenues et produit les contenant". Ce procédé présente l'avantage de fournir des particules d'hexaferrite ayant un rapport de la répartition des champs de commutation (dite ci-après "SFD" pour Switching Field Distribution) au champ coercitif (SFD/Hc) inférieur à 0,4, et une aimantation à saturation supérieure à 60 emu/g.

Le SFD caractérise la largeur de la distribution des champs de commutation. A partir du cycle d'hystérésis (flux magnétique M en fonction du champ magnétisant H), on trace la courbe dM/dH en fonction de H, dérivée du cycle et on calcule la largeur à mi-hauteur $\Delta H$ du pic observé quand $H = Hc$; cette valeur est appelée SFD. On divise cette valeur par le champ coercitif des particules, ce qui donne le rapport sans dimension SFD/Hc.

Une valeur faible de SFD/Hc indique que les moments magnétiques des particules commutent pour un champ proche du champ coercitif. Les transitions de flux lors d'un enregistrement magnétique seront donc mieux définies, l'épaisseur de la couche enregistrée sera plus faible et mieux déterminée, contribuant ainsi à un bruit plus faible, donc à un rapport signal/bruit plus élevé, particulièrement lorsque la densité d'information est élevée. Une valeur faible de SFD/Hc indique aussi une répartition étroite de la taille des particules.

Dans un mode de réalisation préféré, on utilise des particules d'hexaferrite de Ba ou de Sr ayant un indice de forme d'au moins 2 : 1, une longueur comprise entre 0.1 et 0.3 μm, et un champ coercitif supérieur à 4000 Oe.

On ne connaît pas de carte portable magnétique possédant au moins 10 pistes/cm, et de préférence au moins 40 pistes/cm. Les cartes portables sont susceptibles d'être courbées et manipulées sans précaution. Le choix du liant du milieu magnétique est donc particulièrement critique, puisqu'il doit avoir à la fois une cohésion assez élevée pour maintenir les particules magnétiques en place, compte tenu du nombre de pistes/cm, et pour supporter des courbures répétées, sans se fendiller, et assez dur pour résister aux abrasions et aux rayures, sans surcouche.

On a trouvé qu'un milieu comprenant (a) un liant formé d'un polyuréthanne tridimensionnel hautement réticulé et (b) un polytétrafluoroéthylène comprenant éventuellement du polyéthylène confère à la couche magnétique de la carte les propriétés recherchées.

Selon un mode de réalisation, le polyuréthanne tridimensionnel hautement réticulé est formé à partir (a) d'un polyol ramifié de poids moléculaire moyen inférieur à 4000 contenant au moins 8 % en masse de groupes OH et (b) d'un prépolymère d'un isocyanate comprenant au moins trois fonctions isocyanate. On peut utiliser comme polyol des polyester-polyols aromatiques ou aliphatiques ou des polyéther-polyols.

Comme prépolymère d'isocyanate, on peut utiliser tout composé utilisé habituellement dans la chimie des polyuréthannes, éventuellement en mélange, dans la mesure où il a au moins 3 groupes isocyanate.

De tels composés peuvent être obtenus par exemple, à partir de 3 moles d'un diisocyanate apliphatique ou aromatique et d'une mole d'un alcool trivalent tel que le glycérol, l'hexanetriol ou le triméthylolpropane.

Le mélange de liants est présent dans le milieu d'enregistrement magnétique à raison de 10 à 60 g pour 100 g de particules magnétiques.

Le milieu magnétique comprend, en outre, comme il est connu, un certain nombre d'additifs tels que des agents tensioactifs, des lubrifiants, des pigments, etc. Ces additifs ne doivent pas être susceptibles d'exsuder de la couche et d'en perturber la surface.

Il est connu d'introduire dans les couches magnétiques des lubrifiants, afin de réduire le coefficient de frottement entre la couche et la tête, de diminuer l'usure de l'une et de l'autre, et d'améliorer les propriétés de glissement de la couche.

Les lubrifiants liquides ne sont pas appropriés, car ils ont tendance à exsuder du milieu magnétique par élévation de température, et en particulier quand le traitement final du support magnétique exige des températures élevées. Quant aux lubrifiants solides connus, tels que ceux à base de polytétrafluoroéthylène (PTFE), ils sont incompatibles avec les compositions de liants magnétiques habituellement utilisées et contribuent à diminuer la cohésion du milieu magnétique. En outre, ils se dispersent mal, forment des agglomérats et donnent des compositions non homogènes qui, lors de l'utilisation du milieu magnétique, laissent échapper des particules de lubrifiant.

C'est pourquoi on utilise de préférence comme lubrifiant un polytétrafluoroéthylène en poudre, contenant éventuellement du polyéthylène, dans lequel plus de 90 %, et de préférence plus de 99 % des particules, ont une dimension inférieure à 3 μm, à raison de moins de 2 % en masse par rapport à la masse des particules magnétiques.

On peut utiliser par exemple un PTFE en poudre vendu par DuPont de Nemours sous la dénomination de Vydax®, à condition qu'il réponde aux exigences de dimension de particules indiquées ci-dessus.

Dans un mode de réalisation préféré, le milieu magnétique est celui décrit à la demande de brevet FR 88 14219 et intitulée "Milieu d'enregistrement magnétique".

Les autres additifs sont ceux couramment utilisés dans les milieux d'enregistrement magnétique.

Un ou plusieurs agents tensio-actifs sont indispensables pour assurer la mouillabilité, la dispersabilité et l'étalement de la dispersion. Il est avantageux d'utiliser un agent tensio-actif qui soit fixé chimiquement à la surface des particules magnétiques. On peut utiliser, par exemple, un ester d'acide polycarboxylique ou un ester organique complexe d'acide phosphorique. On peut utiliser aussi comme agent de dispersion un copolymère vinylique à base de chlorure de vinyle comprenant des groupes OH. Un tel copolymère comprend en général de 70 à 90 % de chlorure de vinyle, les autres monomères étant choisis parmi l'acétate de vinyle, l'alcool polyvinylique, et des esters acryliques ou méthacryliques portant éventuellement des groupes hydroxyle. Dans ce cas, la quantité de composés contenant des groupes isocyanates doit être calculée de façon à tenir compte des groupes OH du copolymère vinylique, qui doit être lui aussi complètement réticulé dans le réseau tridimensionnel du polyuréthanne. Dans un mode de réalisation préféré, on utilise un alkylphénoxypolyéthoxyéthyl ester de l'acide phosphorique, à raison de 3 à 8 g pour 100 g de particules magnétiques et un copolymère vinylique à raison de moins de 10 % en masse par rapport au liant total.

En outre, la composition de liants comprend les additifs habituels tels que des poudres abrasives comme $Al_2O_3$ ou $Cr_2O_3$, des pigments, sous forme de poudre fine ou de colloïde, tels que du noir de carbone pour colorer la couche et de la silice pour améliorer la qualité et la stabilité de la dispersion.

Enfin elle peut éventuellement contenir des agents pour favoriser la réticulation, suivant le liant utilisé et la cinétique que l'on souhaite.

On forme une dispersion de couchage en mélangeant les particules magnétiques, les différents composants du liant et les additifs, en présence de solvants. On utilise des mélanges solvants connus dans la technique des dispersions magnétiques.

Parmi les solvants utiles, on peut citer des esters tels que l'acétate de méthyle, l'acétate d'éthyle, l'acétate d'isopropyle, le tétrahydrofuranne, des cétones telles que la méthyléthylcétone, la méthylisobutylcétone et la cyclohexanone, le nitrométhane, le nitroéthane, le dichloroéthane, etc. Les quantités utiles de solvants peuvent être déterminées par le technicien en fonction des résultats souhaités, des composés particuliers de la dispersion et de l'appareillage utilisé.

La composition de liants est appliquée sur un support de film qui fera ensuite partie intégrante de la carte finale. Ce support de film doit donc être compatible avec les autres feuilles de plastique constituant la carte : il doit en particulier pouvoir être soudé à chaud avec ces feuilles. Il contribue d'autre part aux propriétés finales de la carte : il doit donc être stable en dimension, résistant à la température et élastique. On peut utiliser tout support en matière plastique polymère répondant à ces exigences : il peut être collable à chaud sur les feuilles de plastique constituant la carte, avec ou sans couche adhésive supplémentaire.

Dans un mode de réalisation préféré, le support utilisé est un support en polycarbonate ayant une épaisseur comprise entre 20 et 80 μm, de préférence entre 40 et 50 μm. On sait que le polycarbonate est stable en dimension, transparent et résistant à la température. On doit cependant utiliser un polycarbonate qui se soude à chaud à des températures qui ne dégradent pas le liant de la dispersion magnétique appliquée dessus.

Après couchage, on oriente éventuellement longitudinalement les particules magnétiques par tout procédé connu, puis on sèche. La couche obtenue a une épaisseur à l'état sec inférieure à 10 μm et de préférence à 6 μm. On obtient un film magnétique en bande. De préférence la largeur de la bande est égale à la largeur souhaitée pour le milieu magnétique sur la carte finale, ou à un multiple de cette dimension.

Selon un procédé de réalisation de la carte selon la présente invention, on assemble le film magnétique tel que préparé ci-dessus, avec les feuillets en matière plastique qui constituent le coeur de la carte, de façon à obtenir une épaisseur totale de carte de 400 à 1000 μm. De préférence, on utilise une matière plastique qui peut se souder sur elle-même par la chaleur, comme par exemple le polycarbonate, etc. Les feuilles d'une même carte peuvent être formées de la même matière plastique ou de matières différentes.

Dans un mode de réalisation préféré, on utilise la même matière plastique que celle utilisée pour le support de la couche magnétique. Les feuilles autres que celles qui supportent la couche magnétique peuvent avoir une épaisseur comprise entre 20 et 300 μm. On réalise alors l'assemblage des feuilles de matière plastique par pression à chaud, le milieu magnétique se trouvant appliqué sur une plaque de verre poli.

Dans un mode de réalisation, on assemble des feuilles pour former un sandwich comportant une couche magnétique sur une de ses faces et on place ce sandwich entre deux plaques de verre poli. L'ensemble est introduit dans une presse thermique. La température doit être supérieure à la température de transition vitreuse des substances plastiques utilisées, support et liant, et inférieure à la température de dégradation du liant et la pression est comprise entre 100 et 1000 N cm².

Enfin on refroidit en maintenant le sandwich sous pression.

Dans un mode de réalisation préféré, une amélioration de l'état de surface de la couche magnétique est obtenue selon le procédé décrit à la demande de brevet FR 88 14220 et intitulée : "Procédé de traitement de surface de couches magnétiques".

Dans un mode de réalisation on chauffe par rayonnement haute fréquence.

Dans le cas de l'utilisation de feuilles de polycarbonate on peut utiliser le procédé décrit à la demande de brevet FR 88 14222 et intitulée "Procédé de soudage de feuilles de polycarbonate".

Ce procédé a l'avantage de combiner dans une même étape

1) l'assemblage de la carte,

2) la réticulation du liant et

3), le traitement de surface de la couche magnétique.

Les cartes peuvent être coupées aux dimensions des normes actuelles des cartes portables, soit 54 x 86 mm. Elles peuvent aussi être plus grandes ou plus petites.

On peut les couper avant ou après l'assemblage à chaud de la carte. Dans un mode de réalisation préféré, on fait une coupe intermédiaire comprenant plusieurs cartes. Les feuilles de matière plastique constituant ces coupes intermédiaires sont maintenues ensemble par des points de soudure par ultrasons avant d'être soumises au chauffage sous pression.

Après refroidissement, les cartes sont finalement coupées dans le format final souhaité, par tout procédé connu.

On a ainsi une carte mémoire comprenant un support recouvert sur au moins une partie d'au moins une de ses faces d'une couche magnétique, l'autre face étant vierge. Cette dernière face peut alors recevoir une image par transfert thermique. Il est évident pour l'homme de l'art qu'on dispose une couche réfléchissante entre la couche magnétique et la face réceptrice d'image.

De même, il est évident que si la couche magnétique ne couvre pas la surface entière d'une des faces, on peut prévoir de la même manière une impression par transfert thermique sur cette partie non recouverte d'une couche magnétique.

Nous allons, à présent, décrire un mode de réalisation du dispositif permettant l'impression thermographique sur l'autre face de la carte.

Le dispositif de réalisation de l'image thermographique sur l'autre face de la carte magnétique est un dispositif bien connu dans la technique antérieure.

La figure représente de façon schématique un appareil 10 de thermographie qui peut être utilisé selon la présente invention. Une carte magnétique 12 du type de celle décrite précédemment est montée sur un rouleau 16, et disposée de telle sorte que la face magnétique soit contre le rouleau. L'impression thermographique peut être réalisée directement sur le polycarbonate ou bien par l'intermédiaire d'une couche réceptrice polymère appliquée sur le polycarbonate. Concernant cette couche réceptrice, il peut s'agir à titre d'exemple de polycarbonate, de polyuréthane ou de polyesther. Le rouleau 16 est couplé mécaniquement à un mécanisme d'entraînement 15. Il est évident que le mécanisme d'entraînement peut entraîner le rouleau dans un sens ou dans un autre. Lorsque le rouleau 16 est entraîné dans le sens inverse de celui des aiguilles d'une montre, le colorant se trouvant sur le support 14 est transféré sur la carte magnétique 12. Un microprocesseur 17 commande le fonctionnement du mécanisme 15. La tête thermique 18 presse le support de colorants 14 et la carte magnétique 12 contre la surface du rouleau 16 et provoque le transfert dudit colorant sur ladite carte magnétique. La tête utilisée peut être de n'importe quel type connu dans la technique et disponible dans le commerce. A titre d'exemple on peut citer la tête thermique FUJI (FTP-040 MCS 001), la tête thermique TDK (F415 HH7-1089) ou bien la tête thermique ROHM (KE 2008-F3). Le support 14 est entraîné à partir du rouleau de distribution 20 jusqu'à l'enrouleur 22 par un mécanisme d'entraînement 23 couplé au rouleau de distribution 22. Le microprocesseur 17 contrôle aussi le mécanisme d'entraînement 23. Les mécanismes d'entraînement 15 et 23 comprennent chacun un moteur qui respectivement font avancer le support 14 et tourner le rouleau 16 soit dans le sens des aiguilles d'une montre, soit dans le sens inverse. Les éléments chauffants de la tête thermique 18 sont sélectivement excités par le circuit 24 qui est également contrôlé par le microprocesseur 17.

Il est bien évident que le support de colorants peut être constitué d'une succession de séries de trames de colorants thermiquement stables. Chaque série inclue une trame jaune, une magenta et une de couleur cyan. Il faut alors utiliser une série par image à réaliser sur la carte magnétique 12. De cette manière, le rouleau doit faire passer trois fois la carte magnétique 12 devant la tête thermique 18 pour réaliser une image couleur complète. La première fois, on réalise une image jaune, la deuxième, une magenta et la troisième une cyan. Les colorants utilisés sont bien connus dans la technique. De tels colorants pouvant être utilisés selon la présente invention sont décrits par exemple dans les brevets des Etats-Unis d'Amérique 4 541 830, 4 698 651, 4 695 287, 4 701 439. En réalité n'importe quel colorant peut être utilisable pourvu qu'il soit transférable sur une couche réceptrice par action de la chaleur.

Un tel dispositif dans lequel la carte magnétique à imprimer est fixée sur un rouleau n'est envisageable que dans la mesure où ladite carte est suffisamment flexible. Ceci est le cas lorsque la carte. ainsi que décrit précédemment, à une épaisseur de l'ordre de 400 à 500 μm. Lorsque la carte est plus épaisse, on utilise alors un dispositif d'impression linéaire dans lequel la carte magnétique est fixée sur un support plan.

Dans le mode de réalisation qui a été décrit ci-dessus, on décrit la réalisation d'une image thermographique utilisant 3 colorants : cyan, jaune et magenta. Selon un autre mode de réalisation on utilise une quatrième composante, à savoir le noir.

Les informations qui peuvent ainsi être imprimées thermiquement sont diverses ; il peut en effet s'agir de caractères alphanumériques, graphes, logos. signatures. photos. etc. Par exemple. dans le cas où l'on veut imprimer la photo d'identité du titulaire de la carte. on analyse ladite photo en 512 lignes, 512 colonnes pour par exemple un format de 3.5 cm x 4.5 cm ce qui fournit une assez bonne résolution graphique.

Dans un mode de réalisation préféré de ladite carte, il est possible de prévoir que les informations, imprimées thermiquement sur une face de la carte, correspondent en tout ou partie aux informations enregistrées sur le support magnétique. Un tel système permettrait en particulier de détecter les usages frauduleux de la carte.

L'avantage d'un tel dispositif d'impression réside dans le fait que l'on peut. dans les limites de la carte magnétique. ajouter des informations à volonté ; ce qui est plus difficile à réaliser par les techniques classiques d'impression (offset, sérigraphie...).

## Revendications

1 - Carte mémoire comprenant un support susceptible de recevoir sur au moins une partie d'au moins une de ses faces une image réalisée par transfert thermique. l'autre face étant recouverte, sur au moins une partie de sa surface. d'une couche magnétique comprenant un milieu d'enregistrement magnétique dont le champ coercitif est supérieur à 4000 Oe et dont la densité d'information est d'au moins 5 kbits/cm².

2 - Carte mémoire selon la revendication 1 caractérisée en ce que le milieu d'enregistrement comprend des particules de ferrite de baryum.

3 - Carte mémoire selon la revendication 2 caractérisée en ce que les particules de ferrite de baryum sont des particules aciculaires.

4 - Carte mémoire selon l'une quelconque des revendications 1 à 3 caractérisée en ce que le milieu d'enregistrement magnétique comprend un liant polymère réticulable.

5 - Carte mémoire selon la revendication 4 caractérisée en ce que le liant polymère réticulable est un polyuréthane.

6 - Carte mémoire selon l'une quelconque des revendications 4 à 5 caractérisée en ce que le liant polymère réticulable comprend des particules solides de lubrifiant.

7 - Carte mémoire selon la revendication 6 caractérisée en ce que les particules de lubrifiant sont des particules de poly(tétrafluoroéthylène).

8 - Carte mémoire selon l'une quelconque des revendications 1 à 7 caractérisée en ce que le support est en polycarbonate.

9 - Carte mémoire selon la revendication 8 caractérisée en ce que l'image par transfert thermique est réalisée directement sur le support de ladite carte.

10 - Carte mémoire selon l'une quelconque des revendications 1 à 9 caractérisée en ce que l'image obtenue par transfert thermique sur l'une des faces de la carte correspond en tout ou partie aux informations enregistrées sur la couche magnétique.

11 - Carte mémoire selon l'une quelconque des revendications 1 à 10 caractérisée en ce que l'image réalisée par transfert thermique est réalisée à partir de trois colorants : cyan, magenta, jaune.

12 - Carte mémoire selon l'une quelconque des revendications 1 à 10 caractérisée en ce que l'image réalisée par transfert thermique est réalisée à partir de quatre colorants : cyan, magenta, jaune et noir.

Fig. 1

COMMANDE DE LA
TETE THERMIQUE

24

18

20

14

16

22

12

10

26

15

MECANISME
D'ENTRAINEMENT

MECANISME
D'ENTRAINEMENT

MICROPROCESSEUR

23

17

EP 0 367 686 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 631 246  (FUJI PHOTO FILM)<br>* Page 11, alinéa 4; page 12, alinéa 2 * <br> --- | 1 | G 11 B    5/70<br>G 11 B    5/80 |
| A | WO-A-8 700 323  (MARS)<br>* Page 9, ligne 26 - page 10, ligne 9; revendication 1 *<br> --- | 1 | |
| A | EP-A-0 146 056  (GNT AUTOMATIC)<br>* Page 3, lignes 29-33; page 5, ligne 33 - page 6, ligne 3; revendication 6 *<br> --- | 1 | |
| A | FR-A-2 605 623  (KODAK-PATHE)<br>* Page 7, lignes 23-29; page 8, lignes 17-22; page 16, tableau 6; revendication 10 *<br> --- | 1-5,8 | |
| A | US-A-4 391 851  (YAMADE et al.)<br>* Colonne 2, lignes 56-65; colonne 3, ligne 65 - colonne 4, ligne 6, lignes 45-47 *<br> --- | 4-8 | DOMAINES TECHNIQUES RECHERCHES (Int. Cl.5) |
| A | WO-A-8 706 193  (EASTMAN KODAK)<br>* Page 3, lignes 10-16; page 6, lignes 4-7; page 7, lignes 34-35; figure 1 *<br> ----- | 10-12 | G 11 B |

Le présent rapport a été établi pour toutes les revendications

| Lieu de la recherche | Date d'achèvement de la recherche | Examinateur |
|---|---|---|
| LA HAYE | 19-01-1990 | KLOCKE S. |